# DEMANDE DE BREVET EUROPEEN

(11) **EP 2 178 176 A1**
(43) Date de publication de la demande: **21.04.2010**
(21) Numéro de dépôt: 09172755.2
(22) Date de dépôt: 12.10.2009
(51) Int. Cl.: H01R 13/53, H01R 13/24

(54) **Procédé de réalisation d'une connexion électrique entre deux blocs de contact, dispositif de connexion et appareillage haute ou moyenne tension associes**

(30) Priorité: 15.10.2008 FR 0857001
(71) Demandeur: AREVA T&D SAS, 92084 Paris La Défense Cedex (FR)
(72) Inventeur: Profit, Laurent, 73410, EPERSY (FR); Girard, Charlie, 73100, AIX LES BAINS (FR)
(74) Mandataire: Ilgart, Jean-Christophe

(57) **Abrégé**

L'invention concerne une nouvelle solution de connexion électrique entre deux blocs de contact (2,3) à évidement cylindrique (20, 30).

Selon l'invention, on utilise un ensemble télescopique (4) électriquement conducteur dont on emboite d'abord une extrémité (40, 401) dans un des blocs (2), que l'on rétracte ensuite afin de pouvoir emboiter l'autre extrémité (41, 410) dans l'autre (3) des blocs de contact.

L'invention facilite le montage/démontage de la connexion électrique entre deux éléments constitutifs d'un poste GIS à haute ou moyenne tension.

## Description

### DOMAINE TECHNIQUE

L'invention concerne la connexion électrique entre deux blocs de contact.

L'invention trouve une application pour les appareillages électriques à haute ou moyenne tension et plus particulièrement dans les postes sous enveloppe métallique ou cuve métallique à isolation gazeuse (GIS).

L'invention permet ainsi dans ce type d'appareillages, lors d'opérations de maintenance, de faciliter le démontage d'un ou plusieurs éléments constitutifs d'un poste GIS (disjoncteur, sectionneur de barre, virole...) sans avoir à démonter l'intégralité du poste.

### ÉTAT DE L'ART ANTÉRIEUR

Pour la transmission de courant entre différents éléments constitutifs d'un même appareillage à haute ou moyenne tension, il est prévu usuellement deux blocs de contact connectés électriquement entre eux par des moyens de connexion amovibles. L'amovibilité entre les deux blocs de contacts n'est utilisée que pour les opérations de montage et démontage en vue d'une maintenance d'un ou plusieurs desdits éléments constitutifs.

De nombreux moyens de connexion électrique amovibles sont connus.

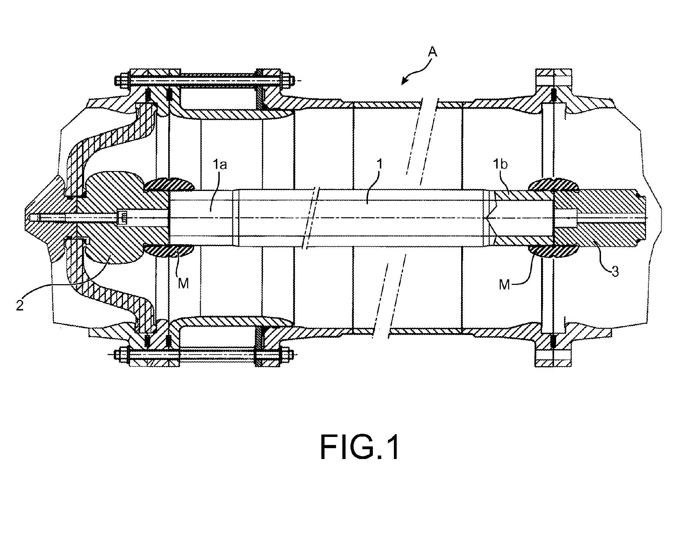

On peut citer ici, les moyens de connexion électrique implantés dans le poste GIS et représentés en figure 1 : ils consistent en une unique barre rigide 1 dont les extrémités 1a, 1b sont emmanchées dans des manchons M eux-mêmes emmanchés chacun dans un des deux blocs de contacts 2, 3. Des joncs sont prévus afin d'empêcher les manchons M de coulisser sur la barre 1 aux deux extrémités 1a, 1b et donc, que la barre 1 ne tombe en position de connexion électrique. La barre 1 est montée en outre dans une virole télescopique 4. Il s'avère qu'en pratique, le montage et démontage de tels moyens de connexion électrique est difficile à réaliser. Le montage/démontage nécessite un outillage spécifique (clefs, pince). Il y a également un risque de mauvais positionnement au montage, avec notamment un décalage possible des manchons. En outre, de tels moyens multiplient le nombre de résistances de contact (barre/manchons ; manchons/blocs de contact).

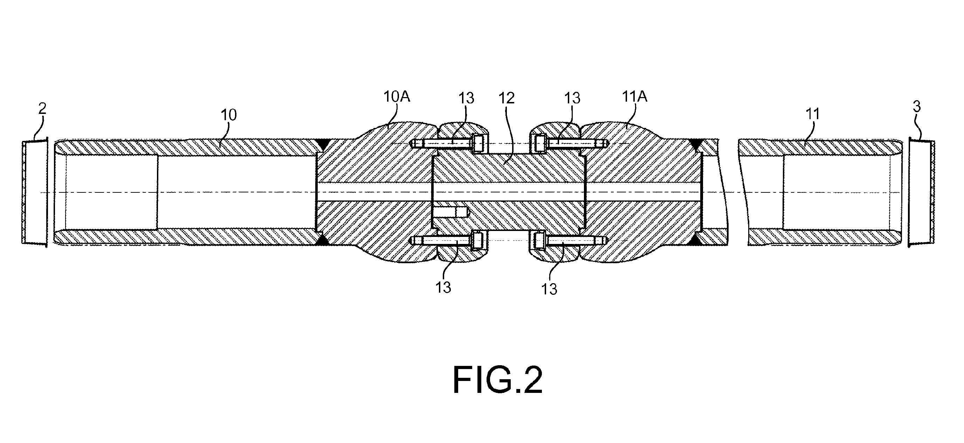

On peut citer également les moyens de connexion électrique implantés dans le poste GIS commercialisé et représentés en figure 2 : ils consistent en deux demi-barres rigides 10, 11 fixées entre elles à l'une de leurs extrémités 10a, 11a par une pièce conformée en diabolo 12 au moyen de vis 13. L'autre des extrémités 10a, 11a de chaque demi-barre est emmanchée dans un bloc de contact 2, 3. De tels moyens impliquent également un montage/démontage difficile avec notamment un nombre de six vis 13 à visser ou dévisser. Le nombre de résistances de contact est en outre augmenté (demi-barres/diabolo).

Le but de l'invention est alors de proposer une nouvelle solution de connexion électrique entre deux blocs de contact électrique qui soit applicable à un appareillage haute ou moyenne tension, tel qu'un poste GIS et qui pallie les inconvénients décrits ci-dessus.

### EXPOSÉ DE L'INVENTION

Pour ce faire, l'invention a pour objet un procédé de réalisation d'une connexion électrique entre deux blocs de contact électrique, les blocs de contact ayant chacun un évidement cylindrique et agencés entre eux en regard l'un de l'autre selon un axe, à une distance L fixe, selon lequel on réalise les étapes suivantes :
a/ emboitement, d'une extrémité d'un ensemble télescopique électriquement conducteur, dans l'un des blocs de contact, la longueur hors tout de l'ensemble télescopique en position déployée étant supérieure à la longueur L,
b/ rétractation de l'ensemble télescopique,
c/ positionnement de l'ensemble télescopique rétracté selon l'axe des blocs de contact,
d/ déploiement de l'ensemble rétracté provoquant l'emboitement de son autre extrémité dans l'autre des blocs de contact électrique.

Selon un mode de réalisation préféré, l'ensemble télescopique est un ensemble de compression et l'étape d/ de déploiement consiste en un relâchement de l'ensemble compressé.

Selon l'invention, on utilise un système télescopique électriquement conducteur avantageusement un ensemble compressible au moyen d'un ressort à compression, pour faire varier la longueur du conducteur entre les deux blocs de contact fixes et ainsi, permettre le montage/démontage aisé entre ceux-ci de la barre jouant le rôle de conducteur.

L'invention concerne également un dispositif de connexion électrique entre deux blocs de contact électrique ayant chacun un évidement cylindrique et agencés entre eux en regard l'un de l'autre selon un axe, à une distance L fixe, et des moyens de connexion amovibles entre les contacts comprenant un ensemble télescopique électriquement conducteur, l'ensemble étant télescopique entre une position déployée dans laquelle ses deux extrémités sont emboitées dans les évidements de blocs en y étant en contact et une position rétractée dans laquelle il a une longueur inférieure à la distance L permettant une déconnexion par désemboitement d'une des ses extrémités avec au moins l'un des blocs de contact tandis que l'autre de ses extrémités reste emboitée dans l'autre des blocs de contact.

Selon un mode de réalisation préféré, l'ensemble télescopique est un ensemble télescopique de compression.

L'ensemble télescopique de compression comprend avantageusement une barre rigide dont une extrémité est adaptée pour s'emboiter avec contact dans l'un des blocs de contact électrique et une pièce conformée en embout monté en translation sur l'autre extrémité de la barre rigide entre une position déployée telle que la longueur hors tout de l'ensemble télescopique est supérieure à la distance L fixe séparant les deux blocs de contact et, une position rétractée dans laquelle l'embout peut être désemboité de l'un des blocs de contact tandis que la barre reste emboitée dans l'autre des blocs de contact.

L'ensemble télescopique comprend un ressort de compression monté entre l'extrémité de la barre rigide et l'embout de connexion électrique pour permettre le rappel en position de ce dernier vers la position rétractée dans laquelle il peut être désemboité du bloc de contact.

Lorsque l'embout est dans sa position déployée, le ressort de compression est avantageusement encore à l'état partiellement comprimé.

L'embout peut comprendre une partie formant fourreau dans laquelle est logé le ressort de compression, le fourreau venant s'emmancher autour de la barre rigide de formes complémentaires, quelle que soit la position de l'embout, en réalisant ainsi un guidage de l'embout coaxialement à la barre lors de son déploiement.

L'invention concerne également un appareillage à haute ou moyenne tension comprenant au moins un dispositif de connexion électrique selon l'un des revendications précédentes.

Un tel appareillage constitue avantageusement un poste sous enveloppe métallique ou cuve métallique à isolation gazeuse (GIS).

### BRÈVE DESCRIPTION DES DESSINS

D'autres avantages et caractéristiques ressortiront mieux à la lecture de la description détaillée faite ci-après en référence aux figures 1 à 4 parmi lesquelles :
- la figure 1 est une vue en coupe longitudinale de moyens de connexion électriques dans un poste GIS selon l'état de l'art,
- la figure 2 est une vue en coupe longitudinale d'autres moyens de connexion électriques dans un poste GIS selon l'état de l'art,
- les figures 3A et 3B sont des vues en coupe longitudinale d'un ensemble télescopique de compression en tant que moyen de connexion électrique selon l'invention, respectivement en positions extrêmes déployée et rétractée,
- la figure 4 est une vue en coupe d'un ensemble télescopique selon les figures 3A et 3B implanté dans un poste GIS et permettant la connexion électrique entre deux blocs de contacts dudit poste.

### EXPOSÉ DÉTAILLÉ DE MODES DE RÉALISATION PARTICULIERS

Sur les figures 1 et 2 sont représentés deux types de moyens de connexion électrique entre deux blocs de contact selon l'état de l'art.

Leur description ainsi que leurs inconvénients a été faite en préambule.

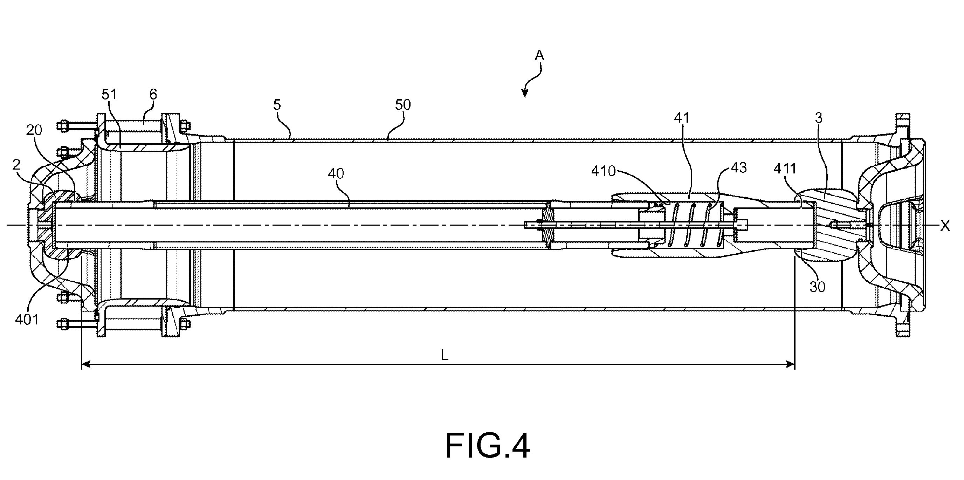

Pour pallier aux inconvénients des solutions de connexion électrique selon l'état de l'art, les inventeurs proposent d'emboiter dans deux blocs de contact 2, 3 à évidement cylindrique 20, 30 un ensemble télescopique de compression 4 (figure 4).

Dans le mode de réalisation illustré, l'ensemble télescopique de compression 4 comprend essentiellement une seule barre 40 sur laquelle est monté un embout 41 de connexion électrique. La barre 40 et l'embout 41 sont réalisés en un matériau de conductivité électrique élevé. De préférence, chacune de leurs extrémités 402, 411 emboîtées dans l'un des blocs de contacts fixe 2, 3, comme expliqué par la suite, est revêtu d'Argent afin d'obtenir un meilleur passage de courant.

L'embout 41 comprend essentiellement une partie intérieure creuse formant fourreau 410.

Un unique ressort de compression 43 est logé dans le fourreau 410 de l'embout 41.

Le fourreau 410 est emmanché autour de la barre rigide 40 de formes complémentaires, quelle que soit la position de l'embout, en réalisant ainsi un guidage de l'embout coaxialement à la barre 40 lors de son déploiement.

Plus exactement, une pièce 42 de guidage du ressort de compression 43 est fixée à l'une des extrémités 400 de la barre 40. Cette pièce 42 sert en outre à éviter toute usure entre le ressort 43 et la barre 40.

Le ressort de compression 43 est par ailleurs en appui contre le fond 4100 du fourreau 410 d'embout 41.

Un système de butée 44 de la position extrême déployée de l'embout 41 est également prévu. Ce système 44 comprend une tige 440 avec une extrémité 4400 en appui contre une rondelle 441 elle-même en appui contre l'embout 41 et avec l'autre extrémité 4401 fixée à une pièce de butée 442 qui coulisse dans une rainure 400 pratiquée dans la barre 40.

Cette pièce de butée 442 de ressort a pour rôle d'éviter que la barre 40 et l'embout 41 ne viennent en butée au fond des blocs de contacts fixes ou électrodes 2 et 3, et ainsi de ne pas shunter le passage de courant qui se fait normalement par les contacts 20 et 30.

En outre, cette fonction de butée 442 permet de pouvoir ajuster la longueur de l'ensemble 4, dans le cas où la tige 440 constitue une vis munie d'une tête 4400 qui coopère avec l'écrou constitué par la pièce de butée 442. Dans ce cas, un simple vissage par la tête de vis 4400 suffit pour ajuster la longueur L1 de l'ensemble 4. Par exemple, la tête 4400 peut être vissée par une clef standard.

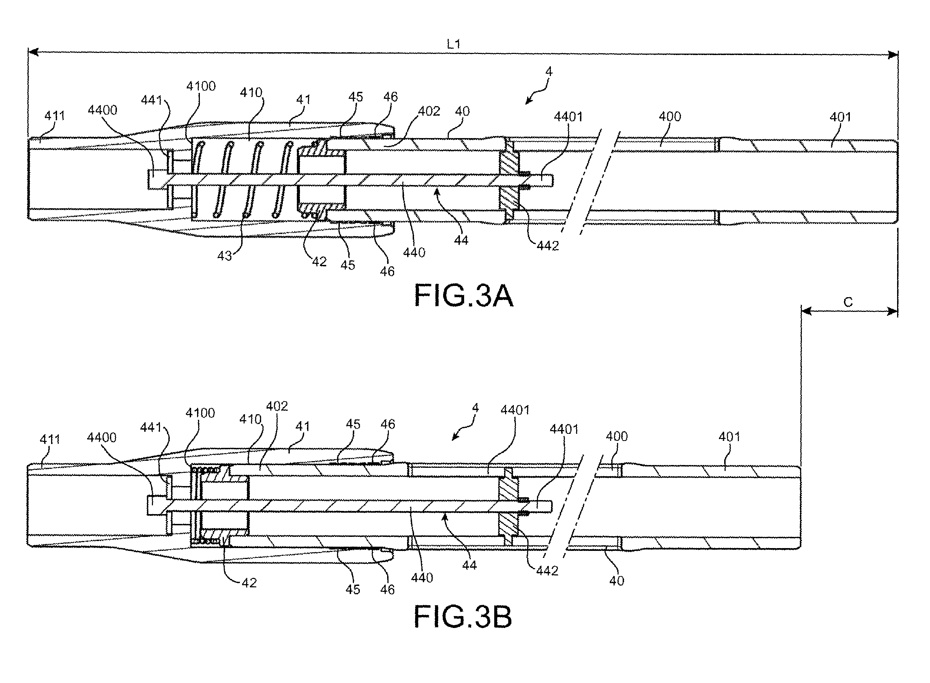

Il va de soi que, dans ce cas, l'agencement de la pièce de butée 442 dans la rainure 400 permet un coulissement sans rotation, comme montré sur les figures 3A et 3B.

A l'interface entre le fourreau 410 et la barre 40 est prévue un contact électrique 45. Celui-ci se présente dans le mode de réalisation illustré des figures 3A, 3B et 4 sous la forme d'une bande unique métallique enroulée en étant fermée sur elle-même. Il peut bien évidemment consisté en une pluralité de bandes agencées parallèlement l'une à l'autre, par exemple au nombre de deux.

Il est prévu de plus à l'interface entre le fourreau 410 et la barre 40, une bande de guidage 46qui permet d'éviter tout risque d'arc-boutement entre la barre 40 et l'embout 41 ou autrement dit à maintenir une coaxialité entre ces pièces.

Ainsi, par simple effort de compression du ressort 43, l'embout 41 est ramené en translation vers la barre 40: l'ensemble télescopique 4 est alors susceptible de passer d'une position extrême déployée (figure 3A) à une position extrême rétractée (figure 3B). La course de déploiement C est ici de l'ordre de 100 mm.

Dans la position extrême déployée, le ressort 43 est encore à l'état partiellement comprimé du fait de l'appui de la butée 442 contre le bord 4000 de la rainure 400.

Dans la position extrême rétractée, le ressort 43 est complètement comprimé.

Dans la position extrême déployée, l'ensemble télescopique de compression a une longueur hors tout L1 supérieure à la distance fixe L séparant le bord 200, 300 des blocs de contact électrique (figure 4).

Pour réaliser la connexion électrique entre deux blocs de contact 2, 3 en regard l'un de l'autre selon un axe X d'un poste GIS selon l'invention, à partir d'un ensemble télescopique de compression 4 qui vient d'être décrit, on procède de la manière suivante :
- emboitement de l'extrémité 401 de la barre rigide 40 dans l'un des blocs de contact 2,
- compression du ressort 43 par effort de poussée sur l'embout 41 vers la barre 40 en appui contre le bloc de contact 2,
- positionnement de l'ensemble télescopique rétracté 4 selon l'axe X des blocs de contact 2, 3,
- relâchement du ressort 43 et donc de l'embout 41 de l'ensemble rétracté provoquant l'emboitement de l'extrémité 411 de l'embout 41 dans l'autre des blocs de contact électrique 3.

Le montage de la liaison entre les deux blocs de contact 2, 3 du poste A selon l'invention est dans le mode de réalisation illustré en figure 4 complété par la fixation d'une virole télescopique 5 à deux parties 50, 51 fixées entre elles au moyen de vis 6 autour de l'ensemble télescopique 4 en position de connexion (figure 4).

Pour procéder au démontage, on réalise les étapes précédentes dans l'ordre inverse comprimant à nouveau le ressort de compression 43 par simple effort de poussée de l'embout 41 vers la barre 40 en butée, provoquant ainsi le désemboitement de l'embout 41 du bloc de contact 3 tandis que la barre 40 reste emboitée dans l'autre des blocs de contact 2. Pour rétracter la barre 40, il est possible de le faire manuellement ou avec une clef d'outillage pour faciliter la manutention.

Ainsi, pour un démontage sur une phase de démontage sur site pour des besoins de maintenance par exemple et en référence à la figure 4, il faut tout d'abord enlever les vis de fixation de la virole 5 côté gauche, faire coulisser la partie télescopique 51, démonter l'ensemble télescopique 4 (barre rétractable) et la poser au fond de la virole 5, puis enlever les vis de fixation de la virole coté droit : l'ensemble constitué de la virole 5 et de la barre rétractable 4 est alors complètement désolidarisé du reste d'un poste (A) sous enveloppe métallique ou cuve métallique à isolation gazeuse (GIS). Enfin, par un moyen de manutention usuel, cet ensemble 4, 5 peut être enlevé.

L'invention telle que décrite est complètement adaptable à tous types de contacts utilisés aujourd'hui. On peut citer les liaisons « rotule-tulipe », contacts à ressort du type utilisant celui décrit dans la demande de brevet EP 0890758, lamelles de contact telles que celle divulguées dans la demande de brevet EP 1 443 601. Les contacts qui conviennent peuvent être de diamètre intérieur compris entre 60 et 130 mm.

Ainsi, l'ensemble télescopique 4 illustré nécessite, en fonction du type de contacts électriques, uniquement un usinage différent au niveau des extrémités de la barre 41 et de l'embout 40 et un usinage différent aux niveaux de l'évidement cylindrique des contacts fixes ou électrodes 2 et 3.

Quant aux contacts centraux ou d'interface 45, entre la barre 40 et l'embout 41, il en est de même, tous les types de contacts cités ci-dessus pourraient être envisageables, avec comme unique modification les usinages intérieurs de l'embout 40.

La raideur du ressort ainsi que le dimensionnement de l'embout et de la barre sont fonction de l'application visée. La raideur du ressort est à calibrer en fonction du type de bloc de contact fixe utilisé, puisque ceux usuellement connus et cités ci-dessus n'engendrent pas le même effort de pénétration de barre 41.

Par exemple, pour un poste GIS à haute tension avec un courant permanent compris entre 2000 A et 6300 A, une connexion électrique peut être assurée efficacement par un ensemble télescopique 4 et avec un ressort 43, emboité dans deux blocs de contact électrique 2, 3 à évidement cylindrique supportant chacun jusqu'à une centaine de kilogrammes ; chaque bloc de contact peut supporter un courant de court-circuit de 31,5 kA à 63 kA en un temps réduit.

Bien que dans le mode de réalisation des figures 3A, 3B et 4, la course C pour réaliser l'emboitement de l'ensemble télescopique soit prévue uniquement sur un côté 40 (en regard du contact fixe 2), il est tout à fait envisageable de diviser la course en deux pour chaque extrémité de l'ensemble. Ainsi, par exemple en considérant la réalisation de la figure 4, la barre 40 sera rétractée pour une opération de démontage de la course C, pour échapper le contact 20 et l'électrode 2, puis l'autre extrémité 41 sera rétractée du contact 30 et de l'électrode 3 de la même course, ou alors chaque extrémité peut être rétractée en même temps d'une valeur C/2.

L'ensemble télescopique 4 illustré prévoit une interface de contact électrique 45 entre la barre 41 et l'embout 40 qui est suffisamment éloignée des contacts électriques fixes 2 et 3. Cela a pour avantage de ne pas amplifier l'échauffement des contacts 2 et 3 qui peut être déjà relativement important pour des courants élevés typiquement de 4000A qui parcourent la connexion électrique entre 2 et 3.

L'invention qui vient d'être décrite permet d'obtenir une connexion électrique entre deux blocs de contacts à évidement cylindrique d'un poste GIS qui présente les avantages suivants :
- facilité de montage de l'ensemble télescopique 4 du mode de réalisation illustré grâce à l'utilisation d'un unique ressort de compression 43,
- conservation à longueur et en position précise de la barre 40 de l'ensemble télescopique 4 grâce au ressort 43,
- démontage complet de la virole formant l'enveloppe entre deux blocs de contacts électriques, pour des raisons de maintenance ou d'essai sur site,
- adaptabilité de l'ensemble télescopique à tous types de blocs de contacts utilisés à ce jour,
- utilisation possible d'une barre standard en tant que partie de l'ensemble télescopique de compression,
- réduction d'un contact électrique par rapport aux solutions de connexion électrique avec manchons selon l'art antérieur : la solution selon l'invention proposée met en oeuvre trois contacts glissants 2,40; 45 ; 3,41 tandis que la solution représentée en figure 1 met en oeuvre quatre contacts glissants et celle de la figure 2 deux contacts vissés et deux contacts glissants,
- pas de nécessité d'outillage spécifique au montage et au démontage comme dans l'état de l'art,
- simplification de la maintenance et réparation d'éléments constitutifs d'un poste GIS selon l'invention,
- aucun risque de tombée accidentelle de barre suite à des vibrations,
- pas de nécessité de joncs ou anneaux d'arrêt en translation comme dans l'état de l'art,
- simplification de la production par l'utilisation possible de barres de longueur avec un pas standard et non, comme dans l'état de l'art de barres lancées et fabriquées avec une grande précision au mm : grâce au ressort de compression 43 et sa butée 42, il est possible d'avoir des ensembles télescopiques de compression avec des barres 40 couvrant des plages sans limite mais, imposée par exemple à 100 mm afin de ne pas augmenter le prix des pièces, seul le vissage du système vis 440/écrou 442 permettant de couvrir les plages.

Il va de soi que d'autres variantes et améliorations peuvent être envisagées sans pour autant sortir du cadre de l'invention.

Ainsi, en tant qu'ensemble télescopique selon l'invention, on peut aussi prévoir tout système télescopique entre la barre 40 et l'embout 41, à la condition de prévoir toujours une interface électrique 45 entre ces éléments 40, 41. Ainsi, on peut prévoir une liaison vissée entre barre 40 et embout 41. L'embout 41 pourrait avoir un taraudage, et la barre 40 un filetage en son extrémité, ou inversement. Un tel montage fileté a pour avantage d'être facilement réglable.

## Revendications

1. Procédé de réalisation d'une connexion électrique entre deux blocs de contact électrique (2, 3), les blocs de contact ayant chacun un évidement cylindrique (20, 30) et agencés entre eux en regard l'un de l'autre selon un axe (X), à une distance L fixe, selon lequel on réalise les étapes suivantes :
a/ emboitement, d'une extrémité (40, 401) d'un ensemble télescopique (4) électriquement conducteur, dans l'un (2) des blocs de contact, la longueur hors tout (L1) de l'ensemble télescopique (4) en position déployée étant supérieure à la longueur (L),
b/ rétractation de l'ensemble télescopique,
c/ positionnement de l'ensemble télescopique rétracté selon l'axe (X) des blocs de contact (2, 3),
d/ déploiement de l'ensemble rétracté provoquant l'emboitement de son autre extrémité (41, 411) dans l'autre des blocs de contact électrique (3).

2. Procédé de réalisation d'une connexion électrique entre deux blocs de contact électrique (2,3) selon la revendication 1, selon lequel l'ensemble télescopique est un ensemble télescopique de compression (4) et selon lequel l'étape d/ de déploiement consiste en un relâchement de l'ensemble compressé.

3. Dispositif de connexion électrique entre deux blocs de contact électrique (2, 3) ayant chacun un évidement cylindrique (20, 30) et agencés entre eux en regard l'un de l'autre selon un axe (X), à une distance (L) fixe, et des moyens de connexion amovibles entre les contacts (2, 3) comprenant un ensemble télescopique (4) électriquement conducteur, l'ensemble étant télescopique entre une position déployée dans laquelle ses deux extrémités (40, 401 ; 41, 411) sont emboitées dans les évidements (20, 30) de blocs (2, 3) en y étant en contact et une position rétractée dans laquelle il a une longueur inférieure à la distance L permettant une déconnexion par désemboitement d'une (41, 411) des ses extrémités avec au moins l'un (3) des blocs de contact tandis que l'autre (40, 401) de ses extrémités reste emboitée dans l'autre (2) des blocs de contact.

4. Dispositif de connexion électrique 3, dans lequel l'ensemble télescopique est un ensemble télescopique de compression (4).

5. Dispositif de connexion électrique selon la revendication 4, dans lequel l'ensemble télescopique de compression (4) comprend une barre rigide (40) dont une extrémité (401) est adaptée pour s'emboiter avec contact dans l'un (2) des blocs de contact électrique et une pièce conformée en embout (41) monté en translation sur l'autre extrémité (400) de la barre rigide, entre une position déployée telle que la longueur hors tout (L1) de l'ensemble télescopique est supérieure à la distance (L) fixe séparant les deux blocs de contact (2, 3) et, une position rétractée dans laquelle l'embout (41) peut être désemboité de l'un des blocs de contact (3) tandis que la barre (40) reste emboitée dans l'autre (2) des blocs de contact.

6. Dispositif de connexion électrique selon la revendication 5, dans lequel l'ensemble télescopique (4) comprend un ressort de compression (43) monté entre l'extrémité (400) de la barre rigide (40) et l'embout de connexion électrique (41) pour permettre le rappel en position de ce dernier vers la position rétractée dans laquelle il peut être désemboité du bloc de contact (3).

7. Dispositif de connexion électrique selon la revendication 6, dans lequel, lorsque l'embout (41) est dans sa position déployée, le ressort de compression (43) est à l'état partiellement comprimé.

8. Dispositif de connexion électrique selon l'une des revendications 6 ou 7, dans lequel l'embout comprend une partie formant fourreau (410) dans laquelle est logé le ressort de compression (43), le fourreau (410) venant s'emmancher autour de la barre (40) rigide de formes complémentaires, quelle que soit la position de l'embout, en réalisant ainsi un guidage de l'embout coaxialement à la barre lors de son déploiement.

9. Appareillage (A) à haute ou moyenne tension comprenant au moins un dispositif de connexion électrique selon l'un des revendications 3 à 8.

10. Appareillage à haute ou moyenne tension selon la revendication 9, **caractérisé en ce qu'**il constitue un poste (A) sous enveloppe métallique ou cuve métallique à isolation gazeuse (GIS).
